# EUROPÄISCHE PATENTSCHRIFT

(11) **EP 1 940 658 B1**
(45) Veröffentlichungstag und Bekanntmachung des Hinweises auf die Patenterteilung: **02.03.2011**
(21) Anmeldenummer: 06793268.1
(22) Anmeldetag: 06.09.2006
(51) Int. Cl.: B60S 1/04

(54) **BEFESTIGUNGSEINRICHTUNG**
FASTENING ARRANGEMENT
DISPOSITIF DE FIXATION

(30) Priorität: 26.09.2005 DE 102005045940
(43) Veröffentlichungstag der Anmeldung: 09.07.2008
(73) Patentinhaber: ROBERT BOSCH GMBH, 70442 Stuttgart (DE)
(72) Erfinder: MAYER, Stephan, 77855 Achern (DE); ESCHENBRENNER, Nicolas, F-67100 Strasbourg (FR)
(86) Internationale Anmeldenummer: PCT/EP2006/066066
(87) Internationale Veröffentlichungsnummer: WO 2007/036412

(56) Entgegenhaltungen:
- CH-A- 405 838
- DE-C1- 10 107 112
- US-A- 4 386 752
- US-A- 5 184 794
- US-A- 5 593 125

## Beschreibung

Die Erfindung betrifft eine Befestigungseinrichtung, um mindestens zwei Bauteile aneinander zu befestigen, insbesondere zur Befestigung einer Scheibenwischanlage an einer Kraftfahrzeugkarosserie.

Bisher werden Scheibenwischanlagen an die Karosserie geschraubt oder genietet. Für die Verschraubung oder die Vernietung benötigt man spezielle Werkzeuge. Außerdem erfordert die Verschraubung oder die Vernietung einen relativ hohen Zeitbedarf, der die Montagekosten erhöht.

Das Patent US 5 593 125A offenbart eine Befestigungseinrichtung zur Befestigung einer Scheibenwischanlage an einer Kraftfahrzeugkarosserie, die als eine Einspanneinrichtung zum Einspannen der Scheibenwischanlage ausgebildet ist und mittels einer Schraubverbindung an der Karosserie befestigbar ist. Die Befestigungseinrichtung weist zum Einspannen der Scheibenwischanlage zwei relativ zueinander verschwenkbare Hälften auf. Im geöffneten Zustand der beiden Hälften lässt sich eine zur Scheibenwischanlage zugehörige Befestigungsstange in den Zwischenraum der beiden Hälften einführen, durch Schließen der beiden Hälften in diesen befestigen. In der geschlossenen Position sind die beiden Hälften durch Rastmittel fixierbar.

Das Patent US 4 386 752 (den Oberbegriff entsprechend) offenbart eine Befestigungseinrichtung, um längliche Elemente, wie etwa Kabelkanäle oder Leitungen, aufzunehmen. Die Befestigungseinrichtung weist hierzu zwei relativ zueinander verschwenkbare Hälften auf, die das längliche Element in geschlossenem Zustand einschließen. Dabei weisen die Hälften je eine Rippe auf, die in eine Sicke des länglichen Elements eingreifen kann. Eine axiale Bewegung des länglichen Elements wird so verhindert.

Die Erfindung hat die Aufgabe, das Befestigungselement der eingangs genannten Art dahingehend zu verbessern, dass die Montage zukünftig schneller und somit kostengünstiger durchgeführt werden kann, sowie eine zuverlässige Befestigung zu gewährleisten.

Die Erfindung löst die gestellte Aufgabe durch eine Befestigungseinrichtung der eingangs genannten Art, die gemäß Anspruch 1 als eine Einspanneinrichtung zum Einspannen von mindestens einem der Bauteile ausgebildet ist, die an dem zweiten Bauteil befestigbar ist. Auf diese Weise können die aneinander zu befestigenden Bauteile mit wenigen Handgriffen in kurzer Zeit miteinander montiert werden. Schrauben, Nieten und dergleichen können somit zukünftig entfallen. Zur Gewährleistung einer zuverlässigen Befestigung weist die Befestigungseinrichtung mindestens einen Vorsprung und/oder mindestens eine Vertiefung auf, mittels derer das einzuspannende Bauteil mit einer korrespondierenden Vertiefung bzw. einem korrespondierenden Vorsprung formschlüssig einspannbar ist, wobei sie das mindestens eine eingespannte Bauteil formschlüssig umgreift derart, dass eine Rotation des Bauteils um seine Längsachse ausgeschlossen ist. Die Befestigungseinrichtung kann zwei relativ zueinander verschwenkbare Hälften aufweisen, so dass das Einspannen des mindestens einen Bauteils schnell und einfach durchgeführt werden kann.

Zur Realisierung des Formschlusses kann die Außenkontur des mindestens einen von der Befestigungseinrichtung formschlüssig umgriffenen Bauteils an die Innenkontur der Befestigungseinrichtung angepasst sein.

Die Befestigungseinrichtung kann aus zwei verschiedenen Materialien gefertigt sein, wobei für die dem mindestens einen der Bauteile zugewandte Kontaktfläche ein günstige Dämpfungseigenschaften aufweisendes Material, das von einem festen Material umgeben ist, vorgesehen ist. Durch die Verwendung des mit günstigen Dämpfungseigenschaften versehenen Materials kann ein zusätzliches Dämpfungsgummi entfallen. Besonders vorteilhaft ist es, wenn das die Dämpfungseigenschaften aufweisende Material und das feste Material jeweils ein Kunststoff ist. Dann kann die Befestigungseinrichtung im Zweikomponenten-Spritzgussverfahren hergestellt werden.

Damit das mindestens eine einzuspannende Bauteil sicher eingespannt bleibt, können die Hälften der Befestigungseinrichtung miteinander verriegelbar sein.

In einer bevorzugten Ausführungsform können die Hälften der Befestigungseinrichtung mit einem Hebelmechanismus miteinander verriegelt werden. Durch den Hebelmechanismus sind zur Montage nur sehr geringe Kräfte erforderlich, um die Hälften miteinander zu verriegeln. Alternativ oder zusätzlich ist es möglich, dass die Hälften der Befestigungseinrichtung ineinander einhängbar sind. Das Verriegeln mit dem Hebelmechanismus sowie das Einhängen können vom Montagepersonal mit einem Handgriff in Sekundenschnelle durchgeführt werden.

Es ist jedoch auch möglich, dass die Hälften der Befestigungseinrichtung mit mindestens einer Feder miteinander verriegelt werden. Die mindestens eine Feder zieht oder drückt dann die beiden Hälften zusammen. Auf diese Weise wird sowohl die Befestigung der aneinander zu befestigenden Bauteile gesichert als auch der Montagevorgang erleichtert, da das Montagepersonal durch die Unterstützung der Federkraft nur noch wenig Kraft aufwenden muss, um die beiden Hälften zusammenzuführen.

Die Befestigungseinrichtung kann in das zweite Bauteil eingehängt werden. Somit lässt sich die Befestigung der Befestigungseinrichtung mit dem zweiten Bauteil ebenfalls in Sekundenschnelle durchführen. Es ist jedoch auch möglich, die Befestigungseinrichtung mit dem zweiten Bauteil zu verschrauben oder zu verschweißen.

Außerdem weist die Erfindung eine Scheibenwischvorrichtung auf, die erfindungsgemäß eine Befestigungseinrichtung nach einem der Ansprüche 1 bis 9 aufweist.

Nachfolgend werden verschiedene Ausführungsbeispiele anhand der beiliegenden Zeichnungen näher erläutert.

Im Einzelnen zeigen:
- Fig. 1 bis 2: einen Befestigungsvorgang zweier miteinander zu verbindender Bauteile mit einer ersten Aus- führungsform einer Befestigungseinrichtung;
- Fig. 3: eine bevorzugte Ausführungsform eines Form- rohrs einer Scheibenwischanlage;
- Fig. 4 bis 6: einen Befestigungsvorgang zweier miteinander zu verbindender Bauteile mit einer zweiten Ausführungsform einer Befestigungseinrichtung.

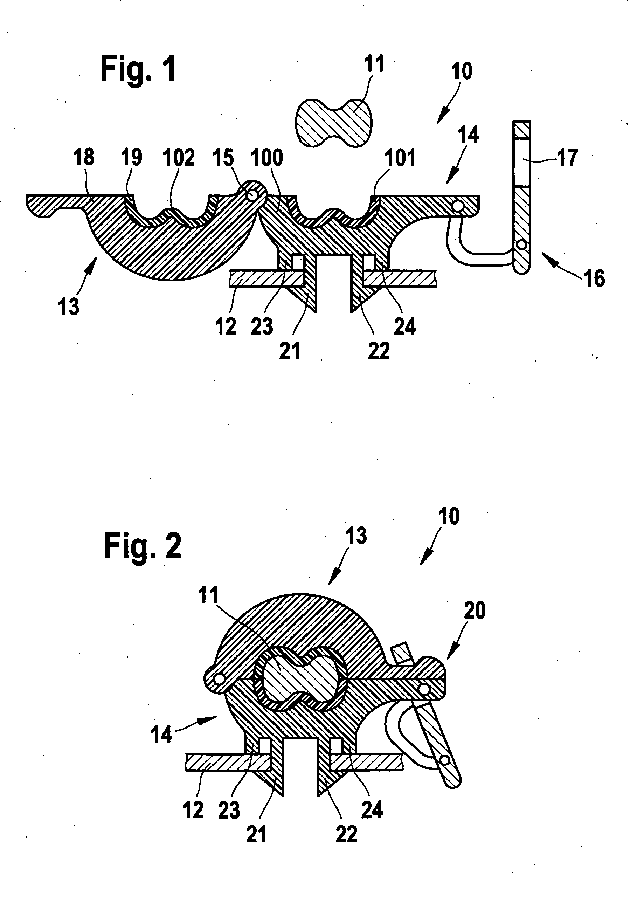

Die Fig. 1 und 2 zeigen eine Befestigungseinrichtung 10, mit der ein Bauteil 11, das ein Formrohr einer Scheibenwischanlage sein kann, und ein Bauteil 12, das eine Kraftfahrzeugkarosserie sein kann, aneinander befestigt werden können.

Die Befestigungseinrichtung 10 weist zwei Hälften 13 und 14 auf, die durch ein Gelenk 15 verschwenkbar miteinander verbunden sind.

Das Bauteil 11 wird in die Hälfte 14 eingelegt. Anschließend wird die Hälfte 13 über das Bauteil 11 geschwenkt. ein Hebelmechanismus 16, der mit einer Öffnung 17 versehen ist, wird mit der Öffnung 17 über einen Fortsatzes 20 geschoben, wodurch die Hälften 13 und 14 miteinander verriegelt werden.

Die Hälfte 13 weist einen Gehäuseteil 18 und ein Dämpfungselement 19 auf. Die Hälfte 14 ist mit einem Gehäuseteil 100 und einem Dämpfungselement 101 versehen. Die Gehäuseteile 18 und 100 sind aus einem festen Material gefertigt, wohingegen die Dämpfungselemente 19 und 101 aus einem günstige Dämpfungseigenschaften aufweisenden Material hergestellt sind. Durch die Verwendung der Dämpfungselemente 19 und 101 kann das Bauteil 11 mit einer Vorspannung in der Befestigungseinrichtung 10 eingespannt werden. Aufgrund der Vorspannung wird das Bauteil 11 in seiner axialen Richtung reibschlüssig in der Befestigungseinrichtung 10 fixiert. Vorteilhafterweise werden die Gehäuseteile 18 und 100 sowie die Dämpfungselemente 19 und 101 aus Kunststoff hergestellt. Zur Herstellung der Hälften 13 und 14 bietet sich dann ein Zweikomponenten-Spritzgussverfahren an.

Die Befestigungseinrichtung kann in axialer Richtung formschlüssig mit dem Bauteil 11 fixiert werden. Dadurch bleibt das Bauteil 11 auch bei Erschütterungen zuverlässig an seiner dafür bestimmten Position.

Die Konturen des Bauteils 11 und der Hälften 13 und 14 sind aneinander angepasst, so dass das Bauteil 11 formschlüssig von den Hälften 13 und 14 umgriffen wird. Dadurch ist eine Rotation des Bauteils 11 um seine Längsachse ausgeschlossen.

Die Befestigungseinrichtung 10 ist mittels zweier Haken 21 und 22 in das Bauteil 12 eingehängt.

Um einen definierten Abstand zwischen der Befestigungseinrichtung 10 und dem Bauteil 12 zu erreichen, ist die Befestigungseinrichtung 10 mit Distanzelementen 23 und 24 ausgestattet.

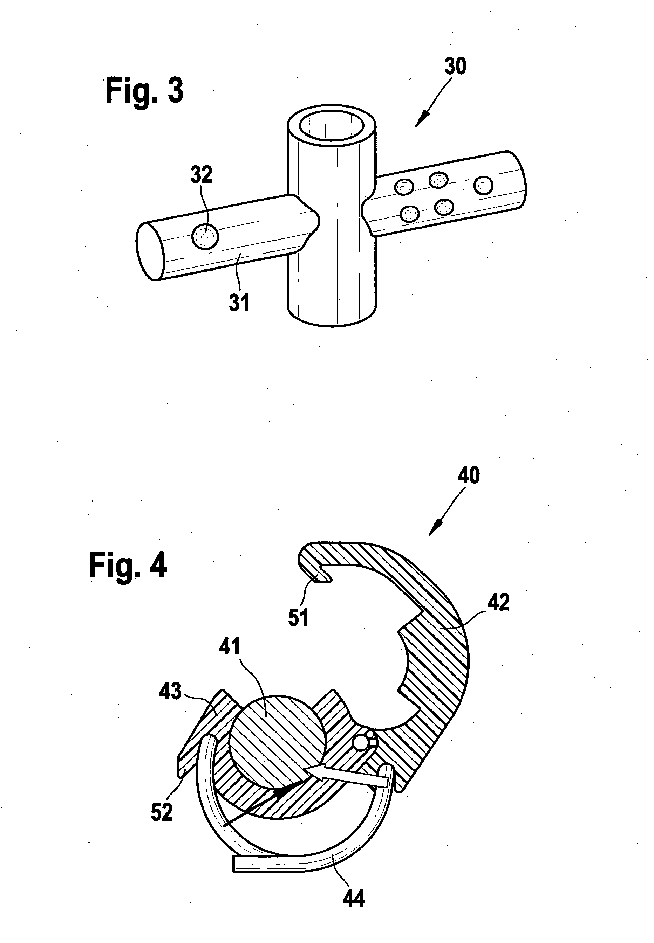

Fig. 3 zeigt ein Formrohr 30 einer hier nicht näher dargestellten Scheibenwischanlage mit einem Befestigungsrohr 31, das mit einer Vertiefung 32 versehen ist, in welche die Befestigungseinrichtung 10 mit einem Vorsprung 102 (siehe Fig. 1) eingreifen kann. Somit kann das Befestigungsrohr 31 formschlüssig in die Befestigungseinrichtung 10 eingespannt werden.

Die Fig. 4 bis 6 zeigen eine Befestigungseinrichtung 40, in die ein Bauteil 41 eingespannt ist. Ein zweites Bauteil, das mit dem Bauteil 41 verbunden werden soil, sowie die Verbindung mit der Befestigungseinrichtung 40 und dem zweiten Bauteil ist aus Gründen der einfacheren Darstellung hier nicht gezeigt.

Zum Einspannen des Bauteils 41 wird eine Hälfte 42 relativ zu einer Hälfte 43 entgegen dem Uhrzeigersinn verschwenkt, wobei eine Feder 44 gespannt wird (siehe Fig. 4).

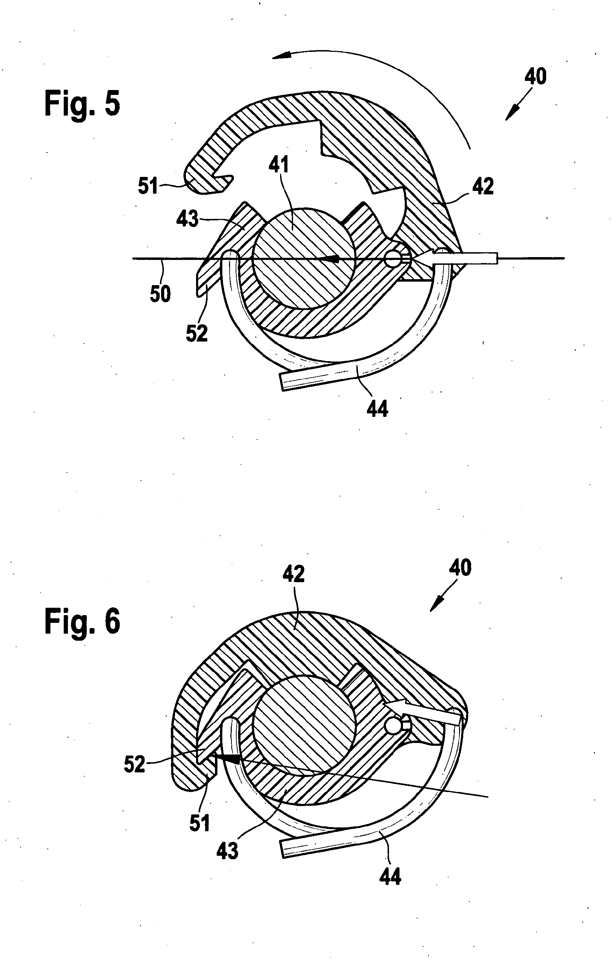

Wenn eine Linie 50, die zwei Lagerpunkte der Feder 44 miteinander verbindet, durch den Mittelpunkt des Bauteils 41 verläuft, dann weist die Feder 44 ihre maximale Zugspannung auf (siehe Fig. 5).

Wenn die Hälfte 42 weiter entgegen dem Uhrzeigersinn zur Hälfte 43 verschwenkt wird, dann wird diese Verschwenkbewegung durch die vorgespannte Feder 44 unterstützt, da sich die vorspannende Feder 44 bei dieser weiteren Bewegung entspannt. Somit muss ein Montagepersonal nur noch sehr wenig Kraft aufwenden, um die beiden Hälften 42 und 43 zusammenzuführen.

Damit die beiden Hälften 42 und 43 aneinander arretiert werden, weist die Hälfte 42 einen Haken 51 auf, der in ein entsprechendes Gegenstück 52 der Hälfte 43 eingreift, sobald die Hälfte 42 ihre Endlage erreicht hat.

## Patentansprüche

1. Befestigungseinrichtung (10, 40), um mindestens zwei Bauteile (11, 12, 41) aneinander zu befestigen, insbesondere zur Befestigung einer Scheibenwischanlage an einer Kraftfahrzeugkarosserie, wobei die Befestigungseinrichtung (10,40) als eine Einspanneinrichtung zum Einspannen von mindestens einem der Bauteile (11, 41) ausgebildet ist, die an dem zweiten Bauteil (12) befestigbar ist, wobei sie mindestens einen Vorsprung und/oder mindestens eine Vertiefung-aufweist, mittels derer das einzuspannende Bauteil mit einer korrespondierenden Vertiefung bzw. einem korrespondierenden Vorsprung formschlüssig einspannbar ist, **dadurch gekennzeichnet, dass** sie das mindestens eine eingespannte Bauteil (11, 41) formschlüssig umgreift derart, dass eine Rotation des Bauteils (11, 41) um seine Längsachse ausgeschlossen ist.

2. Befestigungseinrichtung (10, 40) nach Anspruch 1, **dadurch gekennzeichnet, dass** sie zwei relativ zueinander verschwenkbare Hälften (13, 14, 42, 43) aufweist.

3. Befestigungseinrichtung (10, 40) nach Anspruch 1 oder 2, **dadurch gekennzeichnet, dass** die Außenkontur des mindestens einen von der Befestigungseinrichtung formschlüssig umgriffenen Bauteils (11, 41) an die Innenkontur der Befestigungseinrichtung (10, 40) angepasst ist.

4. Befestigungseinrichtung (10, 40) nach einem der Ansprüche 1 bis 3, **dadurch gekennzeichnet, dass** sie aus zwei verschiedenen Materialien gefertigt ist, wobei für die dem mindestens einen der Bauteile (11, 41) zugewandte Kontaktfläche ein günstige Dämpfungseigenschaften aufweisendes Material, das von einem festen Material umgeben ist, vorgesehen ist.

5. Befestigungseinrichtung (10, 40) nach einem der Ansprüche 2 bis 4, **dadurch gekennzeichnet, dass** die Hälften (13, 14, 42, 43) miteinander verriegelbar sind.

6. Befestigungseinrichtung (10, 40) nach Anspruch 5, **dadurch gekennzeichnet, dass** die Hälften mit einem Hebelmechanismus (16) miteinander verriegelbar sind.

7. Befestigungseinrichtung (10, 40) nach Anspruch 5 oder 6, **dadurch gekennzeichnet, dass** die Hälften (13, 14) ineinander einhängbar sind.

8. Befestigungseinrichtung (10, 40) nach einem der Ansprüche 5 bis 7, **dadurch gekennzeichnet, dass** die Hälften (42, 43) mit mindestens einer Feder (44) miteinander verriegelbar sind.

9. Befestigungseinrichtung (10, 40) nach einem der Ansprüche 1 bis 8, **dadurch gekennzeichnet, dass** sie in das zweite Bauteil (12) einhängbar ist.

10. Scheibenwischvorrichtung, insbesondere für ein Kraftfahrzeug, **dadurch gekennzeichnet, dass** es eine Befestigungseinrichtung nach einem der Ansprüche 1 bis 9 aufweist.

## Claims

1. Fastening arrangement (10, 40) in order to fasten at least two components (11, 12, 41) to each other, in particular for fastening a window wiper system to a motor vehicle body, wherein the fastening arrangement (10, 40) is designed as a clamping means for clamping at least one of the components (11, 41), which clamping means can be fastened to the second component (12), wherein the fastening arrangement has at least one projection and/or at least one depression, by means of which the component which is to be clamped can be clamped in an interlocking manner by a corresponding depression and/or a corresponding projection, **characterized in that** the fastening arrangement engages in an interlocking manner around the at least one clamped component (11, 41) in such a manner that the component (11, 41) is prevented from rotating about the longitudinal axis thereof.

2. Fastening arrangement (10, 40) according to Claim 1, **characterized in that** said fastening arrangement has two halves (13, 14, 42, 43) which are pivotable relative to each other.

3. Fastening arrangement (10, 40) according to Claim 1 or 2, **characterized in that** the external contour of the at least one component (11, 41) which is engaged around in an interlocking manner by the fastening arrangement is matched to the internal contour of the fastening arrangement (10, 40).

4. Fastening arrangement (10, 40) according to one of Claims 1 to 3, **characterized in that** said fastening arrangement is manufactured from two different materials, with a material which has favourable damping properties and is surrounded by a solid material being provided for the contact surface which faces at least one of the components (11, 41).

5. Fastening arrangement (10, 40) according to one of Claims 2 to 4, **characterized in that** the halves (13, 14, 42, 43) can be locked to each other.

6. Fastening arrangement (10, 40) according to Claim 5, **characterized in that** the halves can be locked to each other by a lever mechanism (16).

7. Fastening arrangement (10, 40) according to Claim 5 or 6, **characterized in that** the halves (13, 14) can be fitted one inside the other.

8. Fastening arrangement (10, 40) according to one of Claims 5 to 7, **characterized in that** the halves (42, 43) can be locked to each other by at least one spring (44).

9. Fastening arrangement (10, 40) according to one of Claims 1 to 8, **characterized in that** said fastening arrangement can be fitted into the second component (12).

10. Window wiper device, in particular for a motor vehicle, **characterized in that** said window wiper device has a fastening arrangement according to one of claims 1 to 9.

## Revendications

1. Dispositif de fixation (10, 40) destiné à fixer au moins deux composants (11, 12, 41) l'un à l'autre, notamment pour la fixation d'une installation d'essuie-glace sur une carrosserie de véhicule automobile, le dispositif de fixation (10, 40) étant réalisé sous forme de dispositif de serrage pour serrer au moins l'un des composants (11, 41), qui peut être fixé sur le deuxième composant (12), celui-ci présentant au moins une saillie et/ou au moins un renfoncement, au moyen duquel le composant à serrer peut être serré par engagement par correspondance géométrique avec un renfoncement correspondant ou une saillie correspondante, **caractérisé en ce qu'**il vient en prise par engagement par correspondance géométrique autour d'au moins un composant serré (11, 41) de telle sorte qu'une rotation du composant (11, 41) autour de son axe longitudinal soit impossible.

2. Dispositif de fixation (10, 40) selon la revendication 1, **caractérisé en ce qu'**il présente deux moitiés (13, 14, 42, 43) pouvant pivoter relativement l'une par rapport à l'autre.

3. Dispositif de fixation (10, 40) selon la revendication 1 ou 2, **caractérisé en ce que** le contour extérieur de l'au moins un des composants (11, 41) saisi par engagement par correspondance géométrique sur son pourtour par le dispositif de fixation est adapté au contour intérieur du dispositif de fixation (10, 40).

4. Dispositif de fixation (10, 40) selon l'une quelconque des revendications 1 à 3, **caractérisé en ce qu'**il est fabriqué à partir de deux matériaux différents, un matériau présentant des propriétés d'amortissement favorables étant utilisé pour la surface de contact tournée vers l'au moins un des composants (11, 41), lequel est entouré par un matériau rigide.

5. Dispositif de fixation (10, 40) selon l'une quelconque des revendications 2 à 4, **caractérisé en ce que** les moitiés (13, 14, 42, 43) peuvent être verrouillées ensemble.

6. Dispositif de fixation (10, 40) selon la revendication 5, **caractérisé en ce que** les moitiés peuvent être verrouillées ensemble avec un mécanisme à levier (16).

7. Dispositif de fixation (10, 40) selon la revendication 5 ou 6, **caractérisé en ce que** les moitiés (13, 14) peuvent être accrochées l'une dans l'autre.

8. Dispositif de fixation (10, 40) selon l'une quelconque des revendications 5 à 7, **caractérisé en ce que** les moitiés (42, 43) peuvent être verrouillées ensemble avec au moins un ressort (44).

9. Dispositif de fixation (10, 40) selon l'une quelconque des revendications 1 à 8, **caractérisé en ce qu'**il peut être accroché dans le deuxième composant (12).

10. Dispositif d'essuie-glace, en particulier pour un véhicule automobile, **caractérisé en ce qu'**il présente un dispositif de fixation selon l'une quelconque des revendications 1 à 9.
